# EUROPEAN PATENT APPLICATION

(11) **EP 4 163 841 A1**
(43) Date of publication of application: **12.04.2023**
(21) Application number: 21822210.7
(22) Date of filing: 09.06.2021
(51) Int. Cl.: G06N 20/00

(54) **ESTIMATION DEVICE, TRAINING DEVICE, ESTIMATION METHOD, TRAINING METHOD, AND PROGRAM**

(30) Priority: 09.06.2020 JP 2020100380
(71) Applicant: Preferred Networks, Inc., Tokyo 100-0004 (JP)
(72) Inventor: ABE Motoki, Tokyo 100-0004 (JP); TAKEMOTO Mizuki, Tokyo 100-0004 (JP); ISHITANI Ryuichiro, Tokyo 100-0004 (JP); ODA Keita, Tokyo 100-0004 (JP)
(74) Representative: Noble, Nicholas
(86) International application number: PCT/JP2021/021851
(87) International publication number: WO 2021/251414

(57) **Abstract**

An inferring device includes one or more memories and one or more processors. The one or more processors are configured to acquire a latent variable; generate a structural formula based on the latent variable; calculate a score with respect to the structural formula; and store the latent variable and the score in the one or more memories.

## Description

### FIELD

The present disclosure relates to an inferring device, a training device, an inferring method, a training method, and a non-transitory computer readable medium.

### BACKGROUND

Studies regarding generation of structural formulas by using an algorithm of machine learning and the like, have been performed actively. A model generated by these studies is one that outputs, when a mathematical symbol such as a latent variable is given thereto, a structural formula corresponding to the mathematical symbol. This model sometimes outputs a plurality of structural formulas, and it sometimes outputs one or a plurality of structural formulas stochastically from a plurality of candidates.

By these methods, the generation of structural formula itself becomes possible, but it is difficult to automatically generate a structural formula of a compound having a preferable chemical property. In order to generate the structural formula of the compound having the preferable chemical property, it is required to continuously and automatically generate a plurality of structural formulas, and to keep performing the generation until when the structural formula of the compound having the preferable chemical property can be obtained, which takes quite a long time.

### PRIOR ART

### [Non-patent Literature]

W. Jin, et.al., "Junction Tree Variational Autoencoder for Molecular Graph Generation," 12 Feb. 2018, arXiv:1802.04364, https://arxiv.org/abs/1802.04364

### SUMMARY

The disclosure provides an estimation device that streamlines the generation of structural formulas.

### PROBLEM TO SOLVE

According to some embodiments, an inferring device includes one or more memories and one or more processors. The one or more processors are configured to acquire a latent variable; generate a structural formula based on the latent variable; calculate a score with respect to the structural formula; and store the latent variable and the score in the one or more memories.

### BRIEF DESCRIPTION OF DRAWINGS

Fig. 1 is a block diagram schematically illustrating an inferring device according to one embodiment;
Fig. 2 is a flow chart illustrating processing of the inferring device according to the embodiment;
Fig. 3 is a block diagram schematically illustrating a training device according to one embodiment;
Fig. 4 is a flow chart illustrating processing of the training device according to the embodiment;
Fig. 5 is a flow chart illustrating processing of the inferring device according to the embodiment; and
Fig. 6 is an example of a hardware implement of one embodiment.

### DETAILED DESCRIPTION

Hereinafter, embodiments of the present invention will be explained while referring to the drawings. The explanation of the drawings and the embodiments is presented as an example, and does not limit the present invention.

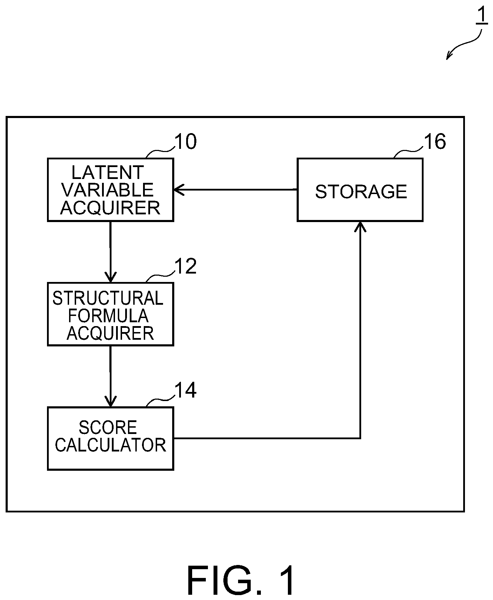

Fig. 1 is a block diagram schematically illustrating an inferring device according to the present embodiment. An inferring device 1 includes a latent variable acquirer 10, a structural formula acquirer 12, a score calculator 14, and a storage 16.

The latent variable acquirer 10 acquires a latent variable that is used in the structural formula acquirer 12. This latent variable may be coordinates indicating one point in a multidimensional latent space. Specifically, in the following explanation, the term of latent variable is sometimes used as a meaning of the coordinates indicating one point in the latent space. This latent variable includes a meaning of a hidden vector and a latent vector, for example.

The latent variable acquirer 10 may acquire a numerical sequence generated by using random numbers, for example, as latent variables. After performing an optimization regarding the acquisition of latent variable based on a result stored in the storage 16, the latent variable acquirer 10 may acquire a latent variable based on the optimized model, for example. In the present disclosure, the latent variable may include a scalar, or a concept including a matrix being a vector of two dimensions or more, and further, it may also be a concept including a tensor as a result of further generalizing these.

The structural formula acquirer 12 acquires a structural formula based on the latent variable acquired by the latent variable acquirer 10. The structural formula expresses a structure of a compound such as a molecule or crystal, two-dimensionally in a pseudo manner, for example. The structural formula acquirer 12 may infer and acquire a structural formula by one method, and in addition to that, it may also infer and acquire a structural formula by a plurality of methods. Further, it is also possible to execute the inference of structural formula by a method of performing complementary inference. For instance, a structure of a compound can be expressed by a graph.

The score calculator 14 calculates a score with respect to the structural formula acquired by the structural formula acquirer 12. The score is determined based on a chemical property which the compound expressed by the structural formula has, for example. For instance, the score calculator 14 may calculate a plurality of scores from a plurality of properties, and then calculate a score indicated by one scalar from these plurality of scores.

The storage 16 stores information of the latent variable acquired by the latent variable acquirer 10 and information of the score. In addition to that, when the inferring device 1 is concretely realized by hardware based on processing of software, the storage 16 may store a program and the like (including OS and the like) which execute the processing of the software. The storage 16 may be provided in the inferring device 1, and it may also be provided outside the inferring device 1. For example, the storage 16 may be provided in a server via a network such as the Internet, or on a cloud.

The inferring device 1 may include, other that the above, an input interface that inputs data, and an output interface that outputs a result to the outside.

Next, regarding each configuration, one example of processing will be described.

The structural formula acquirer 12 may acquire a structural formula from a latent variable based on a method such as, for example, Junction Tree VAE (Variational Autoencoder) or AAE (Adversarial Autoencoder). For example, a latent variable is input in a model generated based on these methods, thereby acquiring a structural formula. For example, in a case of a model of Junction Tree VAE, a 56-dimensional latent variable is input to acquire a structural formula, and in a case of a model of AAE, a 32-dimensional latent variable is input to acquire a structural formula. A latent variable is input in an intermediate layer of a model generated by an autoencoder, for example, a layer of a decoder, and the model outputs a structural formula based on a feature amount indicated by the latent variable.

The score calculator 14 measures a structural feature of the structural formula acquired by the structural formula acquirer 12, as one of the scores described above, and acquires a chemical property from this structural feature. The acquisition of chemical property is executed by a docking simulation, for example. The score calculator 14 calculates the score based on this chemical property, for example. For instance, the score may be calculated based on at least one of a position of a certain compound and a potential function, obtained by the docking simulation. The position of the compound indicates that at which position of certain protein the compound bonds, for example.

The score calculator 14 may take not only the position of the compound but also a direction of the compound into consideration. The structural formula itself is one having one-dimensional or two-dimensional structure, but actually, the compound has a three-dimensional structure. Accordingly, for the compound expressed by the structural formula, not only its docking position but also a docking direction and internal coordinates become important elements as well. For this reason, the score calculator 14 may also set the docking direction as an evaluation target. For example, regarding a compound used as a medical agent, information indicating that at which degree of affinity the compound bonds to protein, becomes important. In such a case, by performing evaluation with a score while considering at which conformation the compound bonds to protein, together with the position of the compound, it becomes possible to improve accuracy of the score.

For example, the evaluation of the docking is executed by judging that at which position and a posture (including a conformation) the above-described compound bonds to protein, and calculating the degree of chemical energy when the bonding occurs. The compound used for the algorithm of the docking is a compound generated by the structural formula acquirer 12 based on the algorithm of Junction Tree VAE, AAE that generates various structural formulas, and the like. When the compound generated by the various algorithms is bonded to protein, it can be evaluated that the lower the energy, the higher the possibility of actual bonding. Accordingly, it is possible to use magnitude (high or low) of energy taken for the bonding, as an evaluation value.

Specifically, as an example, the inferring device 1 searches for a "compound" having a condition such that it properly bonds to protein or it easily bonds to protein. More specifically, the interring device 1 uses the docking algorithm to execute the evaluation, and calculates a score indicating the easiness of bonding between the compound acquired from the latent variable and protein while considering a position and a posture at which the compound and protein bond. Subsequently, the inferring device 1 searches for, based on this score, the compound capable of properly bonding to protein.

The score calculator 14 may further employ at least one of presence/absence of an aromatic ring, presence/absence of a specific group, a distance with respect to an existing compound determined from the Tanimoto coefficient, a molecular weight, a fingerprint, and a descriptor, as at least one of the above-described plurality of scores. Further, the score calculator 14 may employ an avoidance structure based on toxicity, in vivo kinetics, and so on, as one of the above-described plurality of scores.

The score calculator 14 may calculate the score from any one of these, or it may also acquire a score of a scalar from vectors of a plurality of acquired scores. For example, it is possible to design such that a score indicating a desirable property is set to positive, a score indicating an undesirable property such as the avoidance structure is set to negative, and a total of these is set to a score as a whole. Further, a plurality of scores may be subjected to weighting and then totalized. Furthermore, it is possible to use a statistical model or a neural network model for the score calculation.

For instance, when the inferring device 1 infers a compound for the purpose of performing a search and the like of a compound in a pharmaceutical field or a compound which may be taken by humans or animals in some route, it is possible to design such that a docking score or the like is set to positive, and a score indicating toxicity with respect to a target (humans or animals) to which the compound is given or the like is set to negative, thereby calculating the score. For example, when the inferring device 1 has a purpose of performing a search and the like of a compound which is never taken by humans or animals, a contribution ratio of score regarding the docking, the toxicity, and the like may be reduced. As another example, regarding a compound which is used in a situation where moisture exists, the score calculator 14 may set one that is easily dissolved in water or one that is easily decomposed, to a negative score.

Further, it is possible that the score calculator 14 holds information of compounds and the like regarding already-patented inventions as a database or the like, and it lowers a score regarding these compounds or issues an alert indicating that these compounds are already patented, or the like. Further, the score calculator 14 may preferentially reflect a compound having a peculiar intermediate structure on a positive score.

As described above, the score calculator 14 evaluates the compound acquired by the structural formula acquirer 12 based on a chemical property and the like which the compound has or may have, to thereby calculate a score. This score may be output so as to be utilized for multiple purposes, as described above. Specifically, the score may be calculated based on a properly-defined calculation method, based on a situation and the like under which the compound is used.

The latent variable acquirer 10 may randomly acquire a point in a space with proper dimensions as a latent variable, as described above. Further, the latent variable acquirer 10 may construct a point acquisition model based on latent variables and scores corresponding thereto stored in the storage 16, and acquire a latent variable based on the acquisition model. This acquisition model may be generated based on a multidimensional score distribution, for example. The multidimensional score distribution is a distribution in which scores are corresponded to coordinates of latent variables in multidimensions.

The latent variable acquirer 10 acquires, by using a statistical model generated from the score distribution, for example, a latent variable capable of obtaining a desirable score, namely, a score higher than the score with respect to the latent variable acquired up to the present. Further, it is possible that the latent variable acquirer 10 uses the data stored in the storage 16 to optimize the neural network model, and acquires a latent variable with the use of the optimized model. Further, since the latent variable acquirer 10 can use the score distribution in the multidimensional space which can be acquired beforehand, it may use a model optimized by a Bayesian optimization, for example. In order to execute an optimization of various models, the latent variable acquirer 10 may acquire random numbers as latent variables, calculate scores through the respective configurations, and generate a score distribution in the multidimensional space.

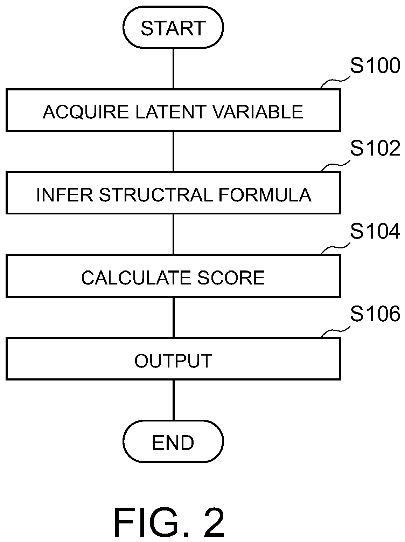

Fig. 2 is an example of a flow chart in a case where the latent variable acquirer 10 executes processing based on an already-acquired model.

First, the latent variable acquirer 10 acquires a latent variable by using a latent variable acquisition model (S100). In Fig. 2, the latent variable acquisition model is an already-generated model, so that based on this model, a latent variable such as one capable of acquiring a further desirable score is acquired.

Next, the structural formula acquirer 12 acquires a structural formula from the acquired latent variable (S102). As described above, the structural formula acquirer 12 may acquire a structural formula from one model, or it may also acquire a structural formula from a plurality of models. When acquiring a structural formula from a plurality of models, the latent variable acquirer 10 acquires, in S100, a latent variable which is proper to be input in a model to be used. This generation of structural formula can employ various algorithms, as described above. The latent variable acquirer 10 acquires the latent variable suitable for the algorithm used in the structural formula acquirer 12.

Next, the score calculator 14 calculates a score with respect to the acquired structural formula (S104). The score calculator 14 calculates a docking score based on the above-described evaluation method.

Next, the inferring device 1 properly outputs information (S106). For example, the inferring device 1 may convert data into visual information or the like being information capable of being perceived by a user, to thereby acquire a structural formula and a score. For instance, the inferring device 1 may output the latent variable and the score to the storage 16. Other than the above, the inferring device 1 may output proper information out of the latent variable, the structural formula, and the score obtained above, to a proper place via the output interface.

As described above, according to the present embodiment, the inferring device 1 can acquire the latent variable based on the already-acquired model, and acquire the structural formula and the score based on the information of the latent variable. As a result of this, the inferring device 1 can search for a preferable structural formula, namely, a preferable compound, based on this score.

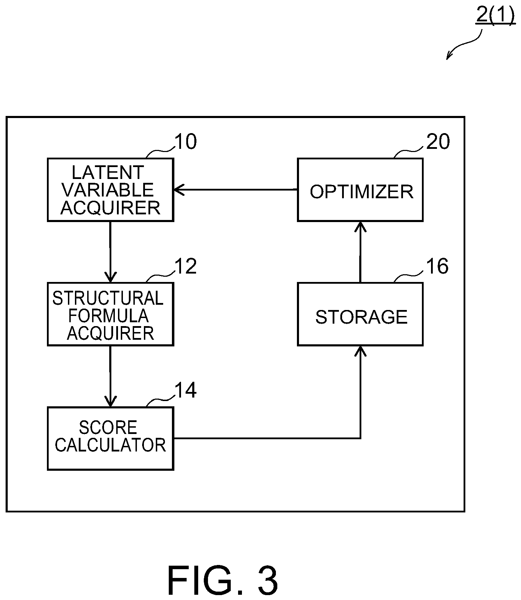

Fig. 3 is a block diagram schematically illustrating a training device 2 that generates the model provided to the latent variable acquirer 10 described above. The training device 2 includes the respective configurations provided to the inferring device 1, and it further includes an optimizer 20.

The score calculator 14 establishes a link between the latent variable and the score to store them in the storage 16.

The optimizer 20 acquires, from latent variables and scores corresponding thereto stored in the storage 16, a score distribution in a space of input dimension of a model used in the structural formula acquirer 12. Based on this score distribution, the optimizer 20 optimizes the model used by the latent variable acquirer 10. The optimizer 20 optimizes the model used by the latent variable acquirer 10, by using the Bayesian optimization, for example.

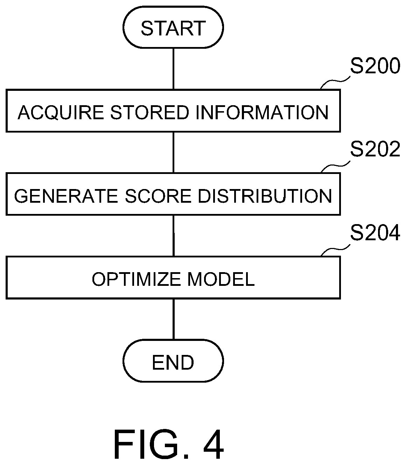

Fig. 4 is a flow chart illustrating processing of the training device 2.

First, the optimizer 20 acquires information of the latent variables and the scores corresponding thereto stored in the storage 16 (S200).

Next, the optimizer 20 generates, based on the acquired information, a score distribution in the multidimensional space (S202).

Next, the optimizer 20 optimizes the model of the latent variable acquirer 10 (S204). As described above, the optimizer 20 can acquire the score distribution as a prior distribution, for example, and thus the Bayesian optimization can be performed. Further, the model can be constructed by, not the Bayesian optimization, but the other optimizations.

As described above, according to the present embodiment, the training device 2 can optimize the model of inferring the latent variable capable of acquiring a further desirable score, from the already-acquired information of the latent variables and the scores.

As another example, it is possible that the training device 2 is not provided but the inferring device 1 includes the optimizer 20, as indicated by a reference numeral in parentheses in Fig. 3. Specifically, the inferring device 1 may optimize the model of acquiring the latent variable, while performing the processing from the acquisition of latent variable to the calculation of score.

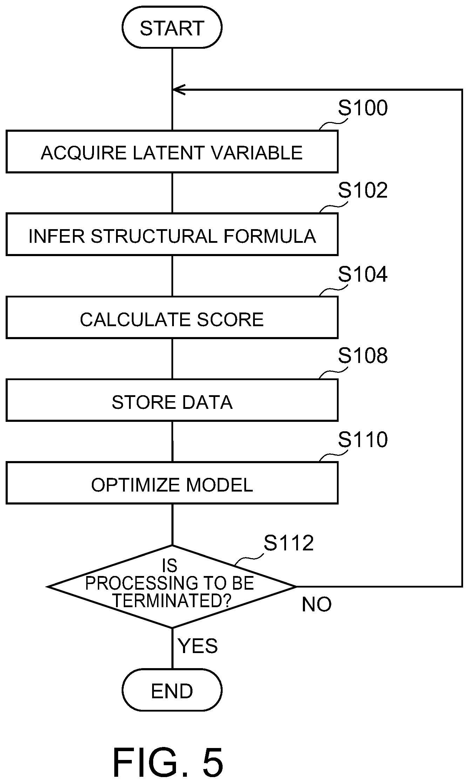

Fig. 5 is a flow chart illustrating an example of processing of the inferring device 1. The processing up to S104 is the same as that in Fig. 2, and thus it will be omitted.

After the processing of S104, the score calculator 14 establishes a link between the acquired latent variable and the score of the acquired latent variable to store them in the storage 16 (S108). By storing them as described above, data regarding a relation between the latent variable and the score corresponding thereto is accumulated.

Next, the optimizer 20 optimizes the model used by the latent variable acquirer 10 (S112). First, the optimizer 20 acquires the accumulated data from the storage 16, and based on the data, it executes the optimization of the model through the Bayesian optimization, for example. For instance, with respect to the model generated at the present moment, the optimizer 20 may update respective parameters of the model so that data of the most recently acquired latent variable and score is reflected. This processing may properly use optimization methods of various neural network models.

Next, the inferring device 1 judges whether or not the processing is to be terminated (S112). This termination judgment may be performed based on whether information of a desirable compound has been generated, for example. Further, it is possible to make judgment based on whether the optimization result has satisfied a predetermined condition, for example, whether a loss or accuracy has become smaller than a predetermined value. Further, as another example, it is possible to make judgment based on a condition such that loops have been repeated a predetermined number of times.

When the processing is to be terminated (S112: YES), the processing is terminated after proper termination processing. For example, it is possible to store parameters and the like of the model acquired at the present moment, in the storage 16. Further, for example, a predetermined number of structural formulas acquired at the present moment may be output, in the order of high score, to a user via the output interface.

When it is judged that the processing is not to be terminated (S112: NO), the inferring device 1 repeats the processing from S100. By repeating the processing as above, it becomes possible to execute the acquisition of structural formula while updating the model of acquiring the latent variable to a model capable of acquiring a better score. This processing is automatically performed, and thus by increasing the number of times of repetition, it becomes possible to infer a structural formula that meets the purpose.

As described above, according to the present embodiment, the inferring device 1 performs the optimization of model while performing the inference, which enables to automatically execute the inference of desirable structural formula. Note that in the above description, the model generated through the Bayesian optimization, for example, is used for acquiring the latent variable, but not limited to this. This model may also be a proper statistical model, for example.

Further, it is also possible to design such that the score distribution stored in the storage 16 is used to acquire the next latent variable through Bayesian inference, for example. As described above, the inference accuracy may be increased without explicitly performing the training. In this case, it is possible to employ a configuration in which the optimizer 20 is omitted, and the latent variable acquirer 10 properly performs the inference based on the data stored in the storage 16.

The above-described embodiment can be applied to a pharmaceutical field, for example. In this case, it is possible to exclude, with the use of the score calculator 14, a compound having toxicity with respect to humans or animals, for example, as one having an avoidance structure, and thus it is possible to automatically generate a compound that avoids the avoidance structure.

As the chemical property used for the score calculation, it is possible to set performance as cosmetics or high-performance materials, other than the activity of medicines, pesticides, and the like described above, to the score. The chemical property is not limited to these, and one that requires inference regarding a molecular structure can be properly applied.

Some or all of each device (the inference device 1 or the training device 2) in the above embodiment may be configured in hardware, or information processing of software (program) executed by, for example, a CPU (Central Processing Unit), GPU (Graphics Processing Unit). In the case of the information processing of software, software that enables at least some of the functions of each device in the above embodiments may be stored in a non-volatile storage medium (non-volatile computer readable medium) such as CD-ROM (Compact Disc Read Only Memory) or USB (Universal Serial Bus) memory, and the information processing of software may be executed by loading the software into a computer. In addition, the software may also be downloaded through a communication network. Further, entire or a part of the software may be implemented in a circuit such as an ASIC (Application Specific Integrated Circuit) or FPGA (Field Programmable Gate Array), wherein the information processing of the software may be executed by hardware.

A storage medium to store the software may be a removable storage media such as an optical disk, or a fixed type storage medium such as a hard disk, or a memory. The storage medium may be provided inside the computer (a main storage device or an auxiliary storage device) or outside the computer.

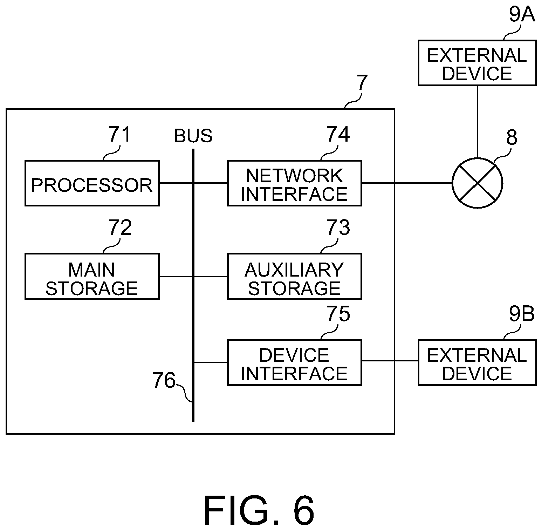

Fig. 6 is a block diagram illustrating an example of a hardware configuration of each device (the inference device 1 or the training device 2) in the above embodiments. As an example, each device may be implemented as a computer 7 provided with a processor 71, a main storage device 72, an auxiliary storage device 73, a network interface 74, and a device interface 75, which are connected via a bus 76.

The computer 7 of Fig. 6 is provided with each component one by one but may be provided with a plurality of the same components. Although one computer 7 is illustrated in Fig. 6, the software may be installed on a plurality of computers, and each of the plurality of computer may execute the same or a different part of the software processing. In this case, it may be in a form of distributed computing where each of the computers communicates with each of the computers through, for example, the network interface 74 to execute the processing. That is, each device (the inference device 1 or the training device 2) in the above embodiments may be configured as a system where one or more computers execute the instructions stored in one or more storages to enable functions. Each device may be configured such that the information transmitted from a terminal is processed by one or more computers provided on a cloud and results of the processing are transmitted to the terminal.

Various arithmetic operations of each device (the inference device 1 or the training device 2) in the above embodiments may be executed in parallel processing using one or more processors or using a plurality of computers over a network. The various arithmetic operations may be allocated to a plurality of arithmetic cores in the processor and executed in parallel processing. Some or all the processes, means, or the like of the present disclosure may be implemented by at least one of the processors or the storage devices provided on a cloud that can communicate with the computer 7 via a network. Thus, each device in the above embodiments may be in a form of parallel computing by one or more computers.

The processor 71 may be an electronic circuit (such as, for example, a processor, processing circuity, processing circuitry, CPU, GPU, FPGA, or ASIC) that executes at least controlling the computer or arithmetic calculations. The processor 71 may also be, for example, a general-purpose processing circuit, a dedicated processing circuit designed to perform specific operations, or a semiconductor device which includes both the general-purpose processing circuit and the dedicated processing circuit. Further, the processor 71 may also include, for example, an optical circuit or an arithmetic function based on quantum computing.

The processor 71 may execute an arithmetic processing based on data and / or a software input from, for example, each device of the internal configuration of the computer 7, and may output an arithmetic result and a control signal, for example, to each device. The processor 71 may control each component of the computer 7 by executing, for example, an OS (Operating System), or an application of the computer 7.

Each device (the inference device 1 or the training device 2) in the above embodiments may be enabled by one or more processors 71. The processor 71 may refer to one or more electronic circuits located on one chip, or one or more electronic circuitries arranged on two or more chips or devices. In the case of a plurality of electronic circuitries are used, each electronic circuit may communicate by wired or wireless.

The main storage device 72 may store, for example, instructions to be executed by the processor 71 or various data, and the information stored in the main storage device 72 may be read out by the processor 71. The auxiliary storage device 73 is a storage device other than the main storage device 72. These storage devices shall mean any electronic component capable of storing electronic information and may be a semiconductor memory. The semiconductor memory may be either a volatile or non-volatile memory. The storage device for storing various data or the like in each device (the inference device 1 or the training device 2) in the above embodiments may be enabled by the main storage device 72 or the auxiliary storage device 73 or may be implemented by a built-in memory built into the processor 71. For example, the storages 16 in the above embodiments may be implemented in the main storage device 72 or the auxiliary storage device 73.

In the case of each device (the inference device 1 or the training device 2) in the above embodiments is configured by at least one storage device (memory) and at least one of a plurality of processors connected/coupled to/with this at least one storage device, at least one of the plurality of processors may be connected to a single storage device. Or at least one of the plurality of storages may be connected to a single processor. Or each device may include a configuration where at least one of the plurality of processors is connected to at least one of the plurality of storage devices. Further, this configuration may be implemented by a storage device and a processor included in a plurality of computers. Moreover, each device may include a configuration where a storage device is integrated with a processor (for example, a cache memory including an L1 cache or an L2 cache).

The network interface 74 is an interface for connecting to a communication network 8 by wireless or wired. The network interface 74 may be an appropriate interface such as an interface compatible with existing communication standards. With the network interface 74, information may be exchanged with an external device 9A connected via the communication network 8. Note that the communication network 8 may be, for example, configured as WAN (Wide Area Network), LAN (Local Area Network), or PAN (Personal Area Network), or a combination of thereof, and may be such that information can be exchanged between the computer 7 and the external device 9A. The internet is an example of WAN, IEEE802.11 or Ethernet (registered trademark) is an example of LAN, and Bluetooth (registered trademark) or NFC (Near Field Communication) is an example of PAN.

The device interface 75 is an interface such as, for example, a USB that directly connects to the external device 9B.

The external device 9A is a device connected to the computer 7 via a network. The external device 9B is a device directly connected to the computer 7.

The external device 9A or the external device 9B may be, as an example, an input device. The input device is, for example, a device such as a camera, a microphone, a motion capture, at least one of various sensors, a keyboard, a mouse, or a touch panel, and gives the acquired information to the computer 7. Further, it may be a device including an input unit such as a personal computer, a tablet terminal, or a smartphone, which may have an input unit, a memory, and a processor.

The external device 9A or the external device 9B may be, as an example, an output device. The output device may be, for example, a display device such as, for example, an LCD (Liquid Crystal Display), or an organic EL (Electro Luminescence) panel, or a speaker which outputs audio. Moreover, it may be a device including an output unit such as, for example, a personal computer, a tablet terminal, or a smartphone, which may have an output unit, a memory, and a processor.

Further, the external device 9A or the external device 9B may be a storage device (memory). The external device 9A may be, for example, a network storage device, and the external device 9B may be, for example, an HDD storage.

Furthermore, the external device 9A or the external device 9B may be a device that has at least one function of the configuration element of each device (the inference device 1 or the training device 2) in the above embodiments. That is, the computer 7 may transmit a part of or all of processing results to the external device 9A or the external device 9B, or receive a part of or all of processing results from the external device 9A or the external device 9B.

In the present specification (including the claims), the representation (including similar expressions) of "at least one of a, b, and c" or "at least one of a, b, or c" includes any combinations of a, b, c, a - b, a - c, b - c, and a - b - c. It also covers combinations with multiple instances of any element such as, for example, a - a, a - b - b, or a - a - b - b - c - c. It further covers, for example, adding another element d beyond a, b, and / or c, such that a - b - c - d.

In the present specification (including the claims), the expressions such as, for example, "data as input," "using data," "based on data," "according to data," or "in accordance with data" (including similar expressions) are used, unless otherwise specified, this includes cases where data itself is used, or the cases where data is processed in some ways (for example, noise added data, normalized data, feature quantities extracted from the data, or intermediate representation of the data) are used. When it is stated that some results can be obtained "by inputting data," "by using data," "based on data," "according to data," "in accordance with data" (including similar expressions), unless otherwise specified, this may include cases where the result is obtained based only on the data, and may also include cases where the result is obtained by being affected factors, conditions, and / or states, or the like by other data than the data. When it is stated that "output/outputting data" (including similar expressions), unless otherwise specified, this also includes cases where the data itself is used as output, or the cases where the data is processed in some ways (for example, the data added noise, the data normalized, feature quantity extracted from the data, or intermediate representation of the data) is used as the output.

In the present specification (including the claims), when the terms such as "connected (connection)" and "coupled (coupling)" are used, they are intended as non-limiting terms that include any of "direct connection / coupling," "indirect connection / coupling," "electrically connection / coupling," "communicatively connection / coupling," "operatively connection / coupling," "physically connection / coupling," or the like. The terms should be interpreted accordingly, depending on the context in which they are used, but any forms of connection / coupling that are not intentionally or naturally excluded should be construed as included in the terms and interpreted in a non-exclusive manner.

In the present specification (including the claims), when the expression such as "A configured to B," this may include that a physically structure of A has a configuration that can execute operation B, as well as a permanent or a temporary setting / configuration of element A is configured / set to actually execute operation B. For example, when the element A is a general-purpose processor, the processor may have a hardware configuration capable of executing the operation B and may be configured to actually execute the operation B by setting the permanent or the temporary program (instructions). Moreover, when the element A is a dedicated processor, a dedicated arithmetic circuit, or the like, a circuit structure of the processor or the like may be implemented to actually execute the operation B, irrespective of whether or not control instructions and data are actually attached thereto.

In the present specification (including the claims), when a term referring to inclusion or possession (for example, "comprising / including," "having," or the like) is used, it is intended as an open-ended term, including the case of inclusion or possession an object other than the object indicated by the object of the term. If the object of these terms implying inclusion or possession is an expression that does not specify a quantity or suggests a singular number (an expression with a or an article), the expression should be construed as not being limited to a specific number.

In the present specification (including the claims), although when the expression such as "one or more," "at least one," or the like is used in some places, and the expression that does not specify a quantity or suggests a singular number (the expression with a or an article) is used elsewhere, it is not intended that this expression means "one." In general, the expression that does not specify a quantity or suggests a singular number (the expression with a or an as article) should be interpreted as not necessarily limited to a specific number.

In the present specification, when it is stated that a particular configuration of an example results in a particular effect (advantage / result), unless there are some other reasons, it should be understood that the effect is also obtained for one or more other embodiments having the configuration. However, it should be understood that the presence or absence of such an effect generally depends on various factors, conditions, and / or states, etc., and that such an effect is not always achieved by the configuration. The effect is merely achieved by the configuration in the embodiments when various factors, conditions, and / or states, etc., are met, but the effect is not always obtained in the claimed invention that defines the configuration or a similar configuration.

In the present specification (including the claims), when the term such as "maximize / maximization" is used, this includes finding a global maximum value, finding an approximate value of the global maximum value, finding a local maximum value, and finding an approximate value of the local maximum value, should be interpreted as appropriate accordingly depending on the context in which the term is used. It also includes finding on the approximated value of these maximum values probabilistically or heuristically. Similarly, when the term such as "minimize" is used, this includes finding a global minimum value, finding an approximated value of the global minimum value, finding a local minimum value, and finding an approximated value of the local minimum value, and should be interpreted as appropriate accordingly depending on the context in which the term is used. It also includes finding the approximated value of these minimum values probabilistically or heuristically. Similarly, when the term such as "optimize" is used, this includes finding a global optimum value, finding an approximated value of the global optimum value, finding a local optimum value, and finding an approximated value of the local optimum value, and should be interpreted as appropriate accordingly depending on the context in which the term is used. It also includes finding the approximated value of these optimal values probabilistically or heuristically.

In the present specification (including claims), when a plurality of hardware performs a predetermined process, the respective hardware may cooperate to perform the predetermined process, or some hardware may perform all the predetermined process. Further, a part of the hardware may perform a part of the predetermined process, and the other hardware may perform the rest of the predetermined process. In the present specification (including claims), when an expression (including similar expressions) such as "one or more hardware perform a first process and the one or more hardware perform a second process," or the like, is used, the hardware that perform the first process and the hardware that perform the second process may be the same hardware, or may be the different hardware. That is: the hardware that perform the first process and the hardware that perform the second process may be included in the one or more hardware. Note that, the hardware may include an electronic circuit, a device including the electronic circuit, or the like.

While certain embodiments of the present disclosure have been described in detail above, the present disclosure is not limited to the individual embodiments described above. Various additions, changes, substitutions, partial deletions, etc. are possible to the extent that they do not deviate from the conceptual idea and purpose of the present disclosure derived from the contents specified in the claims and their equivalents. For example, when numerical values or mathematical formulas are used in the description in the above-described embodiments, they are shown for illustrative purposes only and do not limit the scope of the present disclosure. Further, the order of each operation shown in the embodiments is also an example, and does not limit the scope of the present disclosure.

### DESCRIPTION OF SINGS

- 1:: INFERRING DEVICE,
- 10:: LATENT VARIABLE ACQUIRER,
- 12:: STRUCTURAL FORMULA ACQUIRER,
- 14:: SCORE CALCULATOR,
- 16:: STORAGE,
- 20:: OPTIMIZER

## Claims

1. An inferring device comprising:
one or more memories; and
one or more processors configured to:
acquire a latent variable;
generate a structural formula based on the latent variable;
calculate a score with respect to the structural formula; and
store the latent variable and the score in the one or more memories.

2. The inferring device according to claim 1, wherein
the one or more processors acquire the latent variable based on a distribution of the score stored in the one or more memories.

3. The inferring device according to claim 2, wherein
the one or more processors acquire the latent variable to obtain higher score based on the distribution of the score stored in the one or more memories.

4. The inferring device according to claim 3, wherein,
the one or more processors infer the latent variable based on a first model trained based on Bayesian optimization.

5. The inferring device according to any one of preceding claims, wherein
the one or more processors input the latent variable into a trained second model to generate the structural formula.

6. The inferring device according to claim 5, wherein,
the one or more processors generate the structural formula using a plurality of the second models.

7. The inferring device according to claim 6, wherein,
the plurality of the second models are models which are inputted data having different dimension.

8. The inferring device according to claim 6 or 7, wherein
at least two of the second models are models which generate complementary results.

9. The inferring device according to any one of preceding claims, wherein
the one or more processors acquire chemical properties of a material based on a three-dimensional structure of a compound expressed by the structural formula and calculate the score on the chemical properties.

10. The inferring device according to claim 9, wherein
the one or more processors calculate the score by performing a simulation of a docking of the compound.

11. The inferring device according to claim 10, wherein
the one or more processors calculate the score based on a potential by performing the simulation of the docking of the compound.

12. The inferring device according to claim 10 or 11, wherein
the one or more processors calculate the score by evaluating locale of the docking by performing the simulation of the docking of the compound.

13. The inferring device according to any one of claims 9 to 13, wherein
the one or more processors calculate the score further based on at least one of whether the compound has an aromatic ring, whether the compound has a predetermined group, a distance based on Tanimoto coefficient to an existing compound, molecular weight, fingerprints, and descriptors.

14. The inferring device according to any one of claims 9 to 13, wherein
the one or more processors calculate the score further based on an evasive structure.

15. The inferring device according to any one of preceding claims, wherein,
the one or more processors perform iterative process of generation of the structural formula and the calculating the score to obtain the latent variable which has high score, automatically.

16. The inferring device according to any one of preceding claims, wherein,
the one or more processors optimize a model to obtain the latent variable based on information of the latent variable and information of the score relating to the latent variable store in the one or more memories.

17. A training device comprising:
one or more memories; and
one or more processors configured to
optimize a model to obtain latent variable based on information of the latent variable stored in the one or more memories and information of a score relating to the latent variable.

18. The training device according to claim 17, wherein
the one or more processors acquired the latent variable, generate a structural formula based on the latent variable, calculate a score of the structural formula, and store the latent variable and the score in the one or more memories.

19. An inferring method comprising:
acquiring, by one or more processors, latent variable;
generating, by the one or more processors, a structural formula based on the latent variable;
calculating, by the one or more processors, a score or the structural formula; and
storing, by the one or more processors, the latent variable and the score in one or more memories.

20. A training method comprising:
optimizing, by one or more processors, a model to obtain latent variable based on information of the latent variable stored in one or more memories and information of a score relating to the latent variable.

21. A program which, when executed by one or more processors, performs a method comprising:
acquire latent variable;
generate a structural formula based on the latent variable;
calculate a score or the structural formula; and
store the latent variable and the score in one or more memories.

22. A program which, when executed by one or more processors, performs a method comprising:
optimize a model to obtain latent variable based on information of the latent variable stored in one or more memories and information of a score relating to the latent variable.
